# FASCICULE DE BREVET EUROPEEN

(11) **EP 3 744 615 B1**
(45) Date de publication et mention de la délivrance du brevet: **20.10.2021**
(21) Numéro de dépôt: 20177243.1
(22) Date de dépôt: 28.05.2020
(51) Int. Cl.: B62D 12/02, B62D 13/00, B62D 53/00, B60D 1/48, B60D 1/00

(54) **VÉHICULE ROUTIER ATTELABLE COMPORTANT DES DISPOSITIFS D 'ARTICULATION AVANT ET ARRIÈRE**
ANKUPPELBARES STRASSENFAHRZEUG, DAS FRONT- UND HECK-GELENKVORRICHTUNGEN UMFASST
HITCHABLE ROAD VEHICLE COMPRISING DEVICES FOR FRONT AND REAR LINKAGE

(30) Priorité: 28.05.2019 FR 1905678
(43) Date de publication de la demande: 02.12.2020
(73) Titulaire: Commissariat à l'énergie atomique et aux énergies alternatives, 75015 Paris (FR); Lyon Smart Design, 69480 Lachassagne (FR)
(72) Inventeur: CERVANTES, Valéry, 38054 GRENOBLE Cedex 09 (FR); LABORDE, Jérôme, 69480 LACHASSAGNE (FR); LEBLANC, Xavier, 69480 LACHASSAGNE (FR)
(74) Mandataire: INNOV-GROUP

(56) Documents cités:
- WO-A1-2019/068997
- DE-T2- 60 004 282
- US-A- 4 127 202

## Description

### DOMAINE TECHNIQUE

L'invention concerne un véhicule routier attelable adapté à la formation d'un convoi automobile routier formé de plusieurs de ces véhicules attelables.

### ART ANTÉRIEUR

On connait des véhicules routiers attelables aptes à être attachés entre eux par des attelages sans degré de liberté en rotation en lacet pour former des convois routiers automobiles à trajectoire monotrace. Un tel convoi est apte à être piloté par un unique conducteur. Les demandes de brevet FR3002912 et WO2019068997 décrivent des exemples de tels véhicules attelables pour un système de mobilité urbaine.

Ces véhicules attelables comportent typiquement :
- un train de roues avant et un train de roues arrière ;
- une partie avant de châssis sur laquelle est fixée le train de roues avant ;
- une partie arrière de châssis sur laquelle est fixée le train de roues arrière ;
- un dispositif d'articulation, interposé entre la partie avant de châssis et la partie arrière de châssis, ce dispositif d'articulation permettant à la partie avant de châssis de pivoter, par rapport à la partie arrière de châssis, autour d'un axe d'articulation normal à un plan de roulement du véhicule, de manière à modifier un angle d'articulation du véhicule ;
- un attelage avant qui est déplaçable, en alternance, entre :
   - une position attelée, dans laquelle cet attelage avant coopère avec un attelage arrière, identique à l'attelage arrière de ce véhicule et situé sur un autre véhicule, pour attacher mécaniquement, sans degré de liberté en rotation en lacet, ces véhicules entre eux, et aligner la partie avant de châssis de ce véhicule avec la partie arrière de châssis de l'autre véhicule ; et
   - une position dételée ;
- un attelage arrière qui est déplaçable, en alternance, entre :
   - une position attelée, dans laquelle cet attelage arrière coopère avec un attelage avant, identique à l'attelage avant de ce véhicule et situé sur un autre véhicule, pour attacher mécaniquement, sans degré de liberté en rotation en lacet, ces véhicules entre eux et aligner la partie arrière de châssis de ce véhicule avec la partie avant de châssis de l'autre véhicule ; et
   - une position dételée.

Dans la présente description et les revendications, les termes « avant » et « arrière » font référence au sens de marche normal du véhicule.

Par rotation en lacet, on désigne ici un mouvement de rotation uniquement autour d'un axe perpendiculaire au plan de roulement du véhicule. Le plan de roulement d'un véhicule est défini comme le plan passant par les surfaces de contact entre les roues du véhicule et la route sur laquelle circule ce véhicule.

L'attelage est dit être sans degré de liberté si, lorsque deux attelages avant et arrière sont attelés entre eux, l'angle maximal de rotation en lacet de ces attelages l'un par rapport à l'autre dû aux jeux mécaniques est inférieur à 10° ou à 5° ou à 3° ou à 2°.

Ces véhicules routiers attelables, ainsi que les convois qu'ils peuvent former, sont optimisés pour le transport de passagers. Pour ce qui est du transport de charge, les dispositifs d'articulation de ces véhicules représentent un inconvénient car ils obligent à surélever la zone de chargement du véhicule au-dessus du dispositif d'articulation, et limitent d'autant le volume disponible pour le chargement, étant entendu que la hauteur d'un véhicule est de préférence limitée pour des questions, notamment, de tenue de route et d'aérodynamisme. En effet, cela positionne davantage le centre de gravité en hauteur ce qui n'est pas favorable à la tenue de route.

### EXPOSÉ DE L'INVENTION

Le but de l'invention est d'améliorer la capacité de charge des véhicules attelables de l'art antérieur et des convois formés de ces véhicules en permettant à des véhicules attelables de disposer d'un important volume de charge, en permettant la descente du chargement jusqu'à la route, tout en limitant leur hauteur et en préservant leurs fonctionnalités d'emboitement permettant une trajectoire monotrace des convois formés par ces véhicules.

A cet effet, l'invention vise un véhicule routier attelable conforme à la revendication 1.

Un tel véhicule attelable dispose d'une grande liberté d'aménagement de la partie centrale de châssis, qui est libérée des fonctions d'articulation. La partie centrale de châssis peut ainsi être occupée en quasi-totalité par des supports destinés au transport d'un grand nombre de passagers, ou de charges volumineuses. Tout l'espace entre les trains de roues avant et arrière peut être mis à profit pour le chargement et ce, jusqu'au niveau du sol. Des véhicules attelables comportant des plate-formes de chargement proches du sol, ou s'abaissant jusqu'au sol, facilitent le chargement.

La partie centrale de châssis peut contenir, par exemple, une plate-forme de chargement monobloc rigide adaptée au transport de charges lourdes.

Bien que le véhicule présente une grande capacité de charge, il bénéficie néanmoins de tous les avantages des véhicules attelables dont les trains de roues sont emboitables et permettent de former des convois monotraces compacts grâce aux attelages avant et arrières qui agissent respectivement entre la partie avant de châssis et la partie centrale de châssis, et entre la partie arrière de châssis et la partie centrale de châssis.

Les convois formés par de tels véhicules présentent une importante stabilité en louvoiement, grâce à un empattement important.

Le véhicule routier attelable peut comporter les caractéristiques additionnelles suivantes, seules ou en combinaison :
- les parties avant de châssis et arrière de châssis sont libres en rotation en lacet par rapport à la partie centrale de châssis ;
- le dispositif d'articulation avant comporte une articulation formée de barres articulées fixées par des pivots sensiblement perpendiculaires à un plan de roulement du véhicule ;
- ladite articulation comporte deux barres croisées, chacune de ces barres étant reliée par l'une de ses extrémités à la partie centrale de châssis et par l'autre de ses extrémités à la partie avant de châssis ;
- le dispositif d'articulation arrière comporte une articulation formée de barres articulées fixées par des pivots sensiblement perpendiculaires à un plan de roulement du véhicule ;
- ladite articulation comporte deux barres croisées, chacune de ces barres étant reliée par l'une de ses extrémités à la partie centrale de châssis et par l'autre de ses extrémités à la partie arrière de châssis ;
- l'un des trains de roues parmi le train de roues avant et le train de roues arrière présente une voie inférieure à l'autre de ces trains de roues, de sorte que le train de roues avant et arrière de deux véhicules identiques puissent s'emboiter lorsque ces véhicules sont attelés ;
- la partie centrale de châssis est formée d'une structure porteuse rigide ;
- la partie centrale de châssis comporte une plate-forme de charge située sous le niveau correspondant à la hauteur des pneumatiques des trains de roues avant et arrière.
- le véhicule comporte un dispositif d'indexation contrarotatif symétrique de l'angle d'articulation de l'avant du véhicule et de l'angle d'articulation de l'arrière du véhicule, de sorte que le pivotement de l'une des parties avant ou arrière de châssis par rapport à la partie centrale de châssis entraine le pivotement de l'autre des parties avant ou arrière de châssis du même angle par rapport à la partie centrale de châssis, et dans le sens opposé ;
- le dispositif d'indexation comporte un jeu de barres et de pivots mobiles agencés autour de pivots fixes par rapport à la partie centrale de châssis, et adaptés à transmettre le pivotement de l'un à l'autre des dispositifs d'articulation ;
- le dispositif d'indexation comporte deux vérins disposés chacun entre la partie centrale de châssis et l'une des parties avant de châssis et arrière de châssis, les vérins étant couplés ;
- le dispositif d'indexation comporte un amortisseur ;
- le véhicule comporte un dispositif de direction apte à pivoter les roues du train de roues avant de manière indépendante des dispositifs d'articulation.

Les caractéristiques additionnelles énoncées ci-dessus ont notamment les avantages suivants :
- les dispositifs d'articulation à deux barres croisées permettent de réduire au minimum l'espace de débattement entre véhicules (lorsqu'un convoi est constitué) pour former des convois routiers monotraces de grande compacité, facilitant le passage du convoi dans des voies étroites et sinueuses ;
- l'amortisseur du dispositif d'indexation permet de contrecarrer les mouvements de louvoiement dans un convoi routier formé de plusieurs véhicules attelables.

### PRÉSENTATION DES FIGURES

D'autres caractéristiques et avantages de l'invention ressortiront de la description non limitative qui suit, en référence aux dessins annexés dans lesquels :
[Fig.1] La figure 1 représente en perspective un véhicule routier selon l'invention ;
[Fig.2] La figure 2 représente le véhicule de la figure 1 vue de dessus ;
[Fig.3] La figure 3 représente un convoi de deux véhicules attelés, ces véhicules étant identiques au véhicule des figures 1 et 2 ;
[Fig.4] La figure 4 représente le convoi de la figure 3 en position de virage ;
[Fig.5] La figure 5 représente schématiquement un convoi de véhicules attelables comportant certains véhicules identiques au véhicule des figures 1 et 2 ;
[Fig.6] La figure 6 illustre un premier mode de réalisation du dispositif d'indexation angulaire du véhicule des figures 1 et 2, le véhicule étant dans une première position angulaire ;
[Fig.7] La figure 7 est une vue similaire à la figure 6 montrant le véhicule dans une deuxième position angulaire ;
[Fig.8] La figure 8 est une vue similaire à la figure 6 montrant le véhicule dans une troisième position angulaire ;
[Fig.9] La figure 9 est une vue similaire à la figure 6 montrant le véhicule dans une quatrième position angulaire ;
[Fig.10] La figure 10 illustre un deuxième mode de réalisation du dispositif d'indexation angulaire du véhicule des figures 1 et 2.

### DESCRIPTION DÉTAILLÉE

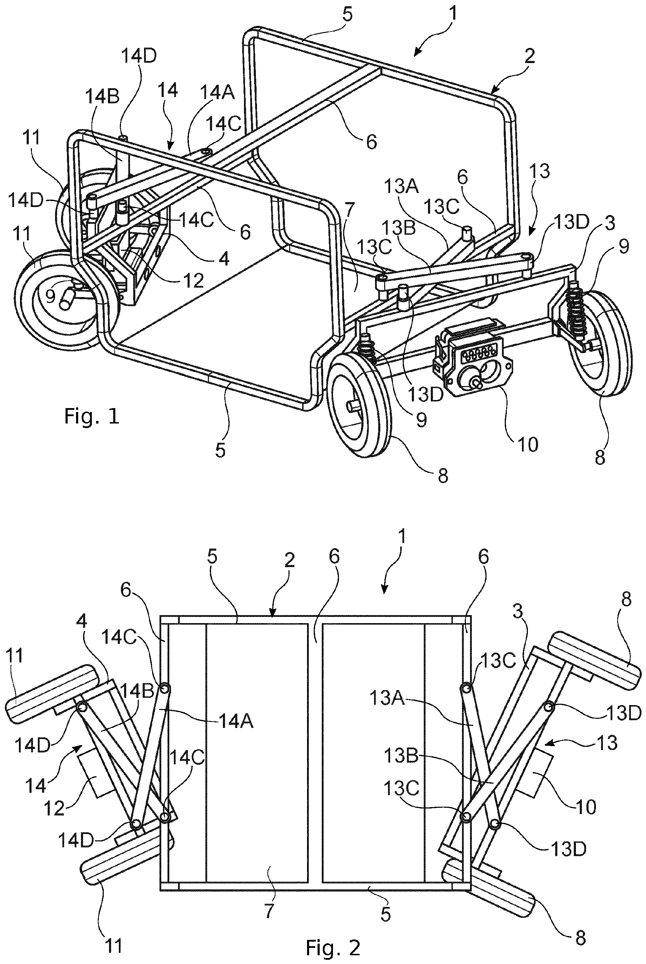

Les figures 1 et 2 représentent un véhicule 1 routier attelable selon l'invention. Le véhicule 1 du présent exemple est simplifié au maximum pour faciliter la description. Le véhicule 1 comporte un châssis qui est ici formé d'une partie centrale 2 de châssis, d'une partie avant 3 de châssis et d'une partie arrière 4 de châssis.

La partie centrale 2 de châssis est ici réalisée par une structure tubulaire tridimensionnelle rigide formée de deux cadres latéraux 5 reliée par des poutres 6. La partie centrale 2 de châssis forme ainsi une structure porteuse qui comporte un support de chargement qui est ici constitué par une plateforme de charge 7. L'agencement de la partie centrale 2 de châssis munie de son support de chargement 7 autorise ici la descente du chargement jusqu'à la route, c'est à dire que la hauteur de la plateforme de chargement 7 peut être choisie pour être au plus près de la route, en gardant une garde au sol acceptable pour permettre le déplacement du véhicule. Cet abaissement de la hauteur de chargement facilite ainsi le chargement et le déchargement de charges sur la plateforme de charge 7. Cet abaissement peut par exemple être généré par compression des suspensions comme il est pratiqué dans le transport public (dégonflage de coussins pneumatiques). Cet abaissement permet de faire reposer la partie centrale sur le sol, et permet ainsi un déchargement très facilité.

La partie avant 3 de châssis est également réalisée par une structure tubulaire. Un train de deux roues avant 8 est monté, par l'intermédiaire de suspensions 9, sur la partie avant 3 de châssis. Un attelage 10 est également monté sur la partie avant 3 de châssis.

La partie arrière 4 de châssis est, dans le présent exemple, de réalisation similaire à la partie avant 3 de châssis, si ce n'est le train de roues. La partie arrière 4 de châssis est donc réalisée en une structure tubulaire qui porte un train de deux roues arrière 11 par l'intermédiaire de suspensions 9 et qui porte un attelage arrière 12.

Dans le présent exemple, la partie avant de châssis 3 et la partie arrière de châssis 4 sont identiques si ce n'est que l'écartement entre les deux roues avant du train de roues avant 8 est supérieur à l'écartement entre les deux roues du train de roues arrière 11 de sorte qu'il est possible de loger, entre les deux roues du train de roues avant 8, les deux roues du train arrière d'un autre véhicule identique (Voir figure 2). Le train de roues avant 8 présente donc une voie supérieure à la voie du train de roues arrière11, de sorte que le train de roues avant 8 et arrière 11 de deux véhicules identiques ou compatibles puissent s'emboiter lorsque ces véhicules sont attelés.

Le véhicule 1 peut ainsi être attelé à un autre véhicule identique ou compatible grâce à ces attelages 10, 12 permettant aux trains de roues de s'emboiter les uns dans les autres. Les attelages avant 10 et arrière 12 peuvent être, par exemple de type « Scharfenberg » ou de tout autre type connu permettant un attelage rigide en lacet.

La partie avant 3 de châssis est articulée par rapport à la partie centrale 2 de châssis grâce à une articulation avant 13. Dans le présent exemple l'articulation 13 est une articulation à deux barres croisées.

L'articulation avant 13 comporte une première barre 13A et une deuxième barre 13B dont chaque extrémité est reliée par un pivot respectivement à la partie centrale 2 de châssis et à la partie avant 3 de châssis. L'articulation 13 comporte ainsi :
- une paire de pivots 13C reliant une extrémité de chaque barre 13A, 13B à la partie centrale 2 de châssis ;
- une paire de pivots 13D reliant une extrémité de chaque barre 13A, 13B à la partie avant 3 de châssis.

Les deux barres 13A, 13B forment les diagonales d'un quadrilatère déformable, qui se déforme lorsque la partie avant 3 de châssis pivote par rapport à la partie centrale 2 de châssis. Les pivots 13C, 13D permettent une rotation autour d'un axe d'articulation normal à un plan de roulement du véhicule. L'articulation avant 13 permet ainsi de modifier un angle d'articulation de l'avant du véhicule, la partie avant 3 de châssis pivotant ainsi autour d'un axe d'articulation normal à un plan de roulement du véhicule, cet axe d'articulation étant mobile au fur et à mesure du pivotement des deux barres 13A, 13B.

La partie arrière 4 de châssis est articulée par rapport à la partie centrale 2 de châssis grâce à une articulation arrière 14. Dans le présent exemple l'articulation 14 est une articulation à deux barres croisées.

L'articulation arrière 14 comporte une première barre 14A et une deuxième barre 14B dont chaque extrémité est reliée par un pivot respectivement à la partie centrale 2 de châssis et à la partie arrière 4 de châssis. L'articulation 14 comporte ainsi :
- une paire de pivots 14C reliant une extrémité de chaque barre 14A, 14B à la partie centrale 2 de châssis ;
- une paire de pivots 14D reliant une extrémité de chaque barre 14A, 14B à la partie arrière 4 de châssis.

Les deux barres 14A, 14B forment les diagonales d'un quadrilatère déformable, qui se déforme lorsque la partie arrière 4 de châssis pivote par rapport à la partie centrale 2 de châssis. Les pivots 14C, 14D permettent une rotation autour d'un axe d'articulation normal à un plan de roulement du véhicule. L'articulation arrière 14 permet ainsi de modifier un angle d'articulation de l'arrière du véhicule, la partie arrière 4 de châssis pivotant ainsi autour d'un axe d'articulation normal à un plan de roulement du véhicule, cet axe d'articulation étant mobile au fur et à mesure du pivotement des deux barres 14A, 14B.

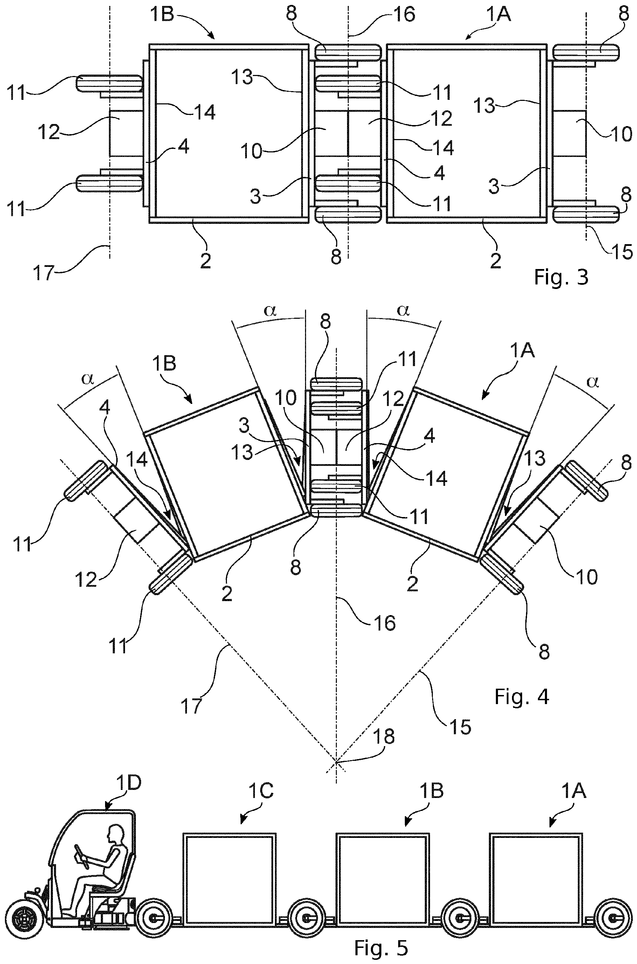

La figure 3 est une vue schématique de dessus de deux véhicules 1A, 1B identiques aux véhicules des figures 1 et 2, ces véhicules 1A, 1B étant attelés. La partie arrière 4 de châssis du véhicule 1A est alignée, et fixée sans degré de rotation en lacet, avec la partie avant 3 de châssis du véhicule 1B. Les véhicules 1A et 1B étant attelés, le train de roues arrière 11 du véhicule 1A et le train de roues avant 8 du véhicule 1B sont ainsi maintenus en permanence imbriqués de sorte que l'axe d'essieu du train de roues arrière 11 du véhicule 1A soit sensiblement confondu avec l'axe d'essieu du train de roues avant 8 du véhicule 1B. Le train de roues arrière 11 du véhicule 1A et le train de roues avant 8 du véhicule 1B se comportent ainsi sensiblement comme un seul et même train de roues.

Sur la figure 3, les deux véhicules 1A, 1B sont alignés. Cette position alignée est celle prise par le convoi lorsqu'il roule en ligne droite. Dans cette position, les articulations 13, 14 des véhicules 1A, 1B maintiennent respectivement les parties avant 3 et parties arrière 4 de châssis parallèles aux parties centrales 2 de châssis correspondantes. Le convoi constitué des véhicules 1A et 1B présente donc trois essieux dont les axes respectifs 15, 16, 17 sont parallèles sur la figure 3.

La figure 4 représente le convoi de la figure 3 lorsqu'il s'inscrit en position de virage permanent. Dans cette position, où le convoi négocie un virage, la partie avant 3 de châssis et la partie arrière 4 de châssis de chaque véhicule 1A, 1B pivotent symétriquement par rapport à la partie centrale 2 de châssis. Ce pivotement symétrique est dit « contrarotatif », c'est à dire que, lorsque la partie avant 3 de châssis pivote d'un certain angle par rapport à la partie centrale 2 de châssis, la partie arrière 4 de châssis pivote alors de ce même angle, mais dans un sens opposé, par rapport à la partie centrale 2 de châssis. Si par exemple, la roue droite du train de roues arrière 11 s'éloigne de la partie centrale 2 de châssis, la roue droite du train de roue avant 8 s'éloignera alors également de la partie centrale 2 de châssis.

Chacune des parties avant 3 et arrière 4 forme avec la partie centrale 2 de châssis correspondante un angle a. La figure 4 montre les quatre angles α qui sont identiques.

Les trois axes d'essieux 15, 16, 17 se coupent en un point 18 qui est le centre de rotation du virage pris par le convoi.

Sur ce modèle des figures 3 et 4, illustrant un convoi minimal composé de deux véhicules 1A, 1B, des convois comportant une quelconque quantité de véhicules 1 peuvent être constitués.

La figure 5 illustre un autre exemple de convoi qui peut comporter des véhicules tels que celui des figures 1 et 2. Dans cet exemple, les véhicules 1A, 1B, 1C sont identiques aux véhicules des figures 1 et 2, tandis que le véhicule de tête 1D est un véhicule permettant le transport d'une ou plusieurs personnes. Selon cet exemple, un conducteur dans le véhicule 1D pilote un convoi de marchandises situées dans les véhicules 1A, 1B, 1C. Différentes configurations de motorisation sont possibles : seul le véhicule 1D peut être motorisé tandis que les véhicules 1A, 1B, 1C sont des véhicules simplement tractés, ou encore tous les véhicules peuvent être motorisés, par exemple grâce à des moteurs-roues logés dans chacune des roues des véhicules.

L'emboitement des trains de roues 8, 11 grâce aux attelages 10, 12 permet d'obtenir un convoi compact dont la capacité de charge de chaque véhicule est importante : le niveau de la plateforme 7 de charges des véhicules 1A, 1B, 1C est située sous le niveau correspondant à la hauteur des pneumatiques des trains de roues, voire sous le niveau des axes d'essieux.

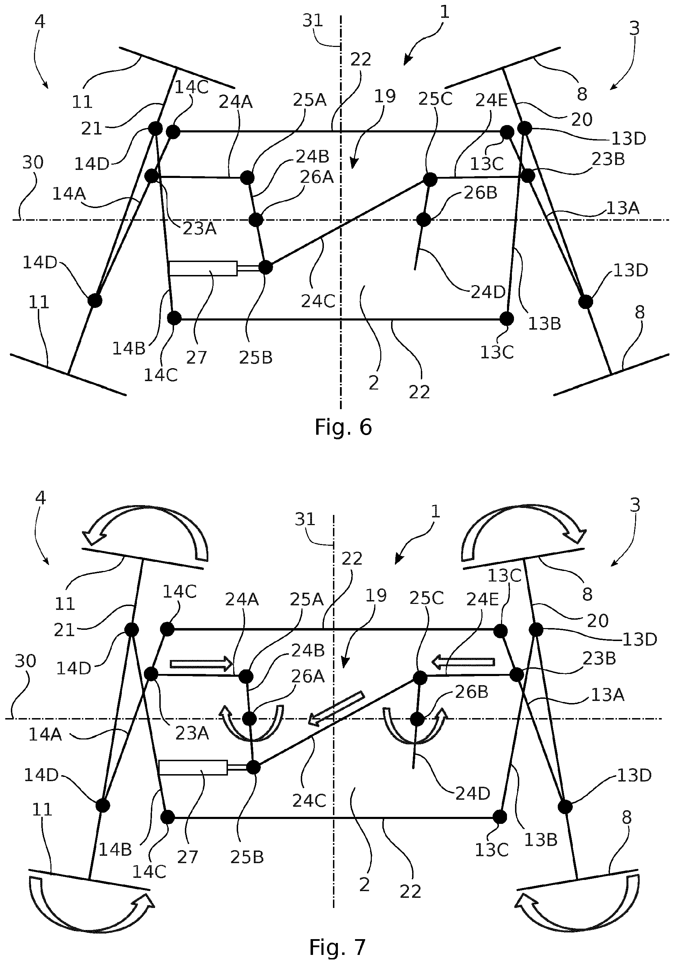

Le pivotement contrarotatif symétrique des parties avant 3 de châssis et arrière 4 de châssis d'un même véhicule 1 peut être réalisé par un dispositif d'indexation du pivotement de la partie arrière 4 de châssis et de la partie avant 3 de châssis. Le pivotement contrarotatif symétrique permet, par exemple, un pivotement de la partie avant 3 ou arrière 4 de châssis d'un angle de 10°de part et d'autre de l'axe longitudinal du véhicule. Deux modes de réalisation des moyens permettant ce pivotement contrarotatif symétrique sont décrits en référence aux figures 6 à 10.

La figure 6 est un schéma cinématique d'un dispositif d'indexation du pivotement de la partie arrière 4 de châssis et de la partie avant 3 de châssis. Sur le schéma de la figure 6, le véhicule 1 est vu de dessus et les différents éléments mécaniques constituant ce véhicule sont représentés sous forme de barres et de pivots. Un essieu avant 20 schématise ici l'axe de rotation du train de roues avant 8 et un essieu arrière 21 schématise ici l'axe de rotation du train de roues arrière 11. Les deux barres croisées 13A, 13B, 14A, 14B des articulations avant 13 et arrière 14 sont représentées avec leurs pivots 13C, 13D, 14C, 14D respectifs. Deux barres longitudinales 22 schématisent le lien rigide entre les articulations 13, 14 qui est procuré par la partie centrale 2 de châssis.

Le dispositif d'indexation 19 comporte un pivot arrière 23A et un pivot avant 23B disposés chacun sur l'une des barres 13A, 14A de chaque articulation 13, 14. Les pivots 23A, 23B sont situés à la même distance de l'extrémité de leur barre 13A, 14A respective et sont situés du même côté (droite ou gauche du véhicule). Les deux pivots 23A, 23B sont disposés symétriquement de part et d'autre de l'axe transversal 31 qui est situé à équidistance des deux essieux 20, 21 lorsque ces deux essieux 20, 21 sont parallèles entre eux (configuration de ligne droite). Les deux pivots 23A, 23B sont également éloignés de la même distance et sont situés du même côté par rapport à l'axe longitudinal 30 de la partie centrale 2 de châssis.

Le dispositif d'indexation 19 comporte de plus un jeu de barres mobiles 24A à 24E et de pivots mobiles 25A à 25C agencés autour de deux pivots fixes : un pivot fixe arrière 26A et un pivot fixe avant 26B. Les pivots fixes 26A, 26B sont fixes par rapport à la partie centrale 2 de châssis, ils sont sur l'axe longitudinal 30 de symétrie de la partie centrale 2 de châssis. La distance entre le pivot fixe arrière 26A et l'essieu 21 arrière est la même que la distance entre le pivot fixe avant 26B et l'essieu avant 20. Ainsi, lorsque par exemple l'essieu avant 20 est sollicité en pivotement, le quadrilatère formant l'articulation 13 se déforme de sorte que le pivot 23B qu'il porte se déplace et entraine, par le jeu des barres mobiles 24A à 24E et des pivots mobiles 25A à 25C se déplaçant relativement aux pivots fixes 26A, 26B, le déplacement du pivot 23A situé sur l'articulation arrière 14. Le dispositif d'indexation 19 garantit ainsi que la partie avant 3 de châssis et la partie arrière 4 de châssis sont toujours pivotées de manière symétrique et contrarotative.

Les barres mobiles se composent de :
- une barre transversale arrière 24B et une barre transversale avant 24D qui sont orthogonales à l'axe longitudinal 30 de la partie centrale 2 de châssis quand le véhicule roule en ligne droite, c'est à dire qu'elles sont orthogonales à la direction du mouvement quand le véhicule roule en ligne droite ;
- une barre longitudinale arrière 24A et une barre longitudinale avant 24E de même longueur ;
- une barre oblique 24C.

La barre longitudinale arrière 24A est reliée par le pivot arrière 23A à une barre 14A de l'articulation arrière 14. La barre longitudinale avant 24E est reliée par le pivot avant 23B à une barre 13A de l'articulation avant 13.

Les barres transversales arrières 24B et avant 24D sont toutes deux montées pivotantes respectivement sur le pivot fixe arrière 26A et sur le pivot fixe avant 26B. La barre transversale arrière 24B est articulée par l'une de ses extrémités à la barre longitudinale arrière 24A via le pivot mobile 25A et, à l'autre de ses extrémités, à la barre oblique 24C via le pivot mobile 25B. La barre transversale avant 24D est articulée par l'une de ses extrémités à la barre longitudinale avant 24E et à la barre oblique 24C via le pivot mobile 25C. Le pivot mobile 25C relie les extrémités des trois barres 24C, 24D, 24E en permettant une liaison pivot entre ces trois barres.

La barre oblique 24C relie les pivots mobiles 25B et 25C. La distance entre le pivot fixe arrière 26A et le pivot mobile 25B est identique à la distance entre le pivot fixe avant 26B et le pivot mobile 25C.

Sur les barres transversales 24D, 24B, la distance entre le pivot fixe arrière 26A et le pivot mobile 25A est égale à la distance entre le pivot fixe avant 26B et le pivot mobile 25C.

Optionnellement, le dispositif d'indexation 19 peut comporter un amortisseur 27 relié d'un côté au pivot mobile 25B, ou à un autre pivot mobile, et de l'autre côté au châssis par un pivot, cet amortisseur 27 étant éventuellement pilotable, pour éviter les phénomènes d'oscillation et de louvoiement au cours du pivotement des parties avant 3 de châssis et parties arrière 4 de châssis.

Sur la figure 6, le véhicule 1 est dans une position angulaire maximale relative à un virage à gauche d'un convoi (le véhicule 1 est représenté seul sur cette figure schématique mais fait partie d'un convoi comme sur la figure 4, le reste du convoi n'ayant pas été représenté). L'angle formé entre la partie avant 3 de châssis (et plus précisément l'essieu 20) et la parte centrale 2 de châssis (et plus précisément l'axe transversal 31) est de même valeur et opposé à l'angle formé entre la partie arrière 4 de châssis (et plus précisément l'essieu 21) et la parte centrale 2 de châssis (et plus précisément l'axe transversal 31).

Les figures 7 à 9 complètent la figure 6 pour décrire la cinématique du dispositif d'indexation en cours de roulage du véhicule 1. Ces figures illustrent le mouvement angulaire du châssis 2, 3, 4 du véhicule 1 lorsque, à partir de la figure 6, le convoi passe d'un virage à gauche à un virage à droite.

Sur la figure 7, la position angulaire du véhicule 1 commence à revenir vers une position de roulage en ligne droite. Entre la position de la figure 6 et la position de la figure 7, les essieux 20, 21 ont pivoté dans le sens représenté par les flèches proches des roues 8 sur la figure 7. Ce pivotement correspond à une position angulaire qui est toujours relative à un virage à gauche mais d'un angle moins prononcé que l'angle maximum de la figure 6. Entre la position de la figure 6 et la position de la figure 7, les barres longitudinales 24A, 24E et la barre oblique 24C se sont déplacées dans le sens des flèches visibles à la figure 7, tandis que les barres transversales 24B, 24D ont pivoté autour des pivots fixes 26A, 26B.

Lorsque que le convoi de véhicules passe d'une position maximale de virage à gauche (figure 6) à une position de roulage en ligne droite, les essieux 20, 21, qui sont libres en rotation en lacet, suivent le mouvement et passent naturellement par la position de la figure 7 sans avoir besoin d'une commande ou motorisation du pivotement des essieux 20, 21. Le dispositif d'indexation 19 sert uniquement à garantir que le pivotement libre d'un essieu est toujours concomitant au pivotement de l'autre essieu de manière contrarotative.

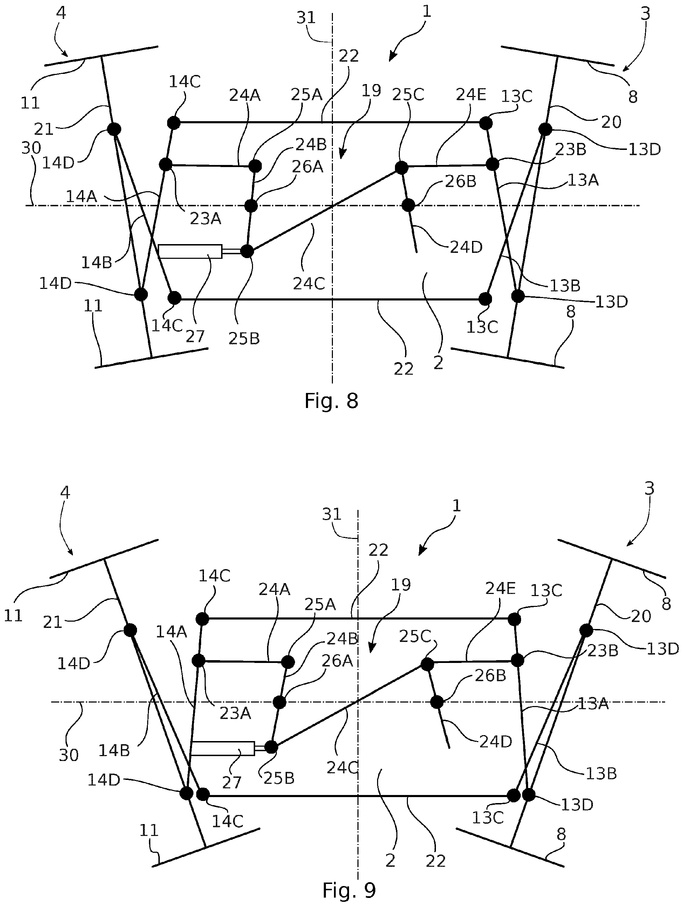

La figure 8 représente le véhicule 1 lorsque le convoi a amorcé son virage à droite. Entre la position angulaire de la figure 7 et celle de la figure 8, le convoi (et donc le véhicule 1) est passé par une position de roulage en ligne droite. Dans la position angulaire de la figure 8, le mouvement amorcé depuis la position de la figure 7 se poursuit : les pivots 23A et 23B et les barres longitudinales 24A, 24E se sont rapprochés encore en direction de l'axe transversal 31, et les barres transversales 24B, 24D ont poursuivi leurs mouvement de pivotement autour des pivots fixes 26A, 26B. Les positions angulaires des barres 13A, 14A qui sont reliées aux pivots 23B, 23A sont ainsi indexées de manière contrarotative.

Sur la figure 9, le virage à droite du convoi s'est accentué jusqu'à une position angulaire maximale pour le véhicule 1 correspondant à l'angle opposé à la position de la figure 1.

Le dispositif d'indexation 19 garanti ainsi que, lorsque le véhicule 1 passe librement par les positions des figure 6 à 9 en suivant le trajet du convoi, le comportement angulaire du véhicule 1 (c'est à dire les positions angulaires relatives entre la partie centrale 2 de châssis et les parties avant 3 et arrière 4 de châssis) reste parfaitement contrarotatif.

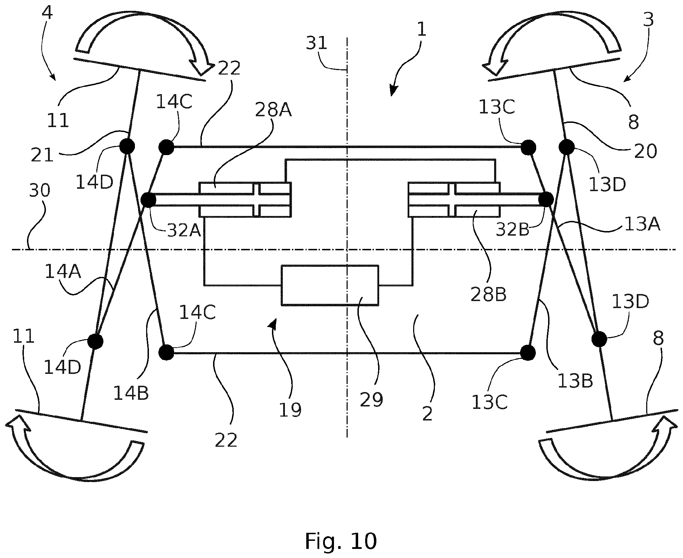

La figure 10 illustre un deuxième mode de réalisation de dispositif d'indexation du pivotement de la partie avant 3 de châssis et de la partie arrière 4 de châssis. Pour ce deuxième mode de réalisation, les éléments similaires au mode de réalisation de la figure 6 seront référencés avec les mêmes numéros.

Sur ce mode de réalisation de la figure 10, le dispositif d'indexation 19 comporte deux vérins 28A et 28B dont le corps est fixé sur la partie centrale 2 de châssis et dont la tige est fixée sur l'une des barres 13A, 14A de l'articulation 13, 14 correspondante par un pivot 32A, 32B. Les deux pivots 32A, 32B sont disposés symétriquement de part et d'autre de l'axe transversal 31 et sont éloignés de la même distance et du même côté par rapport à l'axe longitudinal 30 de la partie centrale 2 de châssis.

Les vérins 28A, 28B sont des vérins double effet identiques (ou tout du moins les cylindrées et sections sont identiques), la chambre inférieure de l'un des vérins étant reliée à la chambre supérieure de l'autre vérin et inversement. Au moins l'un des conduits réalisant cette liaison peut comporter une restriction variable 29. Ainsi, lorsque l'un des essieux 20, 21 est sollicité en pivotement, l'autre essieu est sollicité en pivotement du même angle et dans le sens opposé. La restriction variable 29 joue ici le rôle d'amortisseur.

Le véhicule 1 de la figure 10 présente ainsi un comportement angulaire parfaitement contrarotatif, comme le véhicule des figures 6 à 9.

D'autres variantes de réalisation du véhicule attelable peuvent être mises en œuvre sans sortir du cadre de l'invention. Par exemple, les articulations des parties avant 3 de châssis et parties arrière 4 de châssis peuvent être réalisées, plutôt que par des articulations à deux barres croisées, par d'autres systèmes d'articulation, par exemple une articulation d'essieu rigide de type diligence par cheville ouvrière.

De même, l'articulation avant 13 et/ou l'articulation arrière 14 sont des articulations à barres qui peuvent être d'un autre type que le type à deux barres croisées décrit précédemment. Ces articulations 13, 14 peuvent par exemple comporter trois barres ou plus, comme décrit par exemple dans le document FR2619779.

La distance mutuelle entre les pivots 13C, 14C situés du côté de la partie centrale 2 de châssis peut différer de la distance entre les pivots 13D, 14D situés du côté de la partie arrière 4 ou de la partie avant 3 de châssis.

Le véhicule attelable 1 peut aussi bien être motorisé que non motorisé.

Le véhicule attelable 1 peut être destiné au transport de personne ou de charge. Un convoi de véhicules attelables peut être réalisé par une combinaison hétérogène de véhicules transportant des passagers, de véhicules transportant des charges, ces véhicules étant motorisés ou non, et certains de ces véhicules étant conformes à l'invention.

Par ailleurs, le dispositif d'indexation 19 du pivotement des parties avant 3 et parties arrière 4 de châssis peut être réalisé par d'autres moyens, par exemple par des capteurs de mesure d'angle et par des vérins électroniquement pilotés commandant les articulations 13, 14.

La voie du train de roue arrière peut être supérieure à la voie du train de roue avant, ou tout autre arrangement, permettant l'emboitement des trains de roues.

Le véhicule peut en outre comporter un dispositif de direction apte à pivoter, autour d'une direction perpendiculaire à un plan de roulement du véhicule, les roues du train de roues avant ou arrière, par rapport à leurs essieux respectifs, de manière indépendante des dispositifs d'articulation. Un tel dispositif de direction apte à modifier, en réponse à une commande d'un conducteur du véhicule, l'angle de braquage de chaque roue du train avant, actionné indépendamment des dispositifs d'articulations, est par exemple décrit dans le document WO2014135310.

## Revendications

1. Véhicule routier attelable (1) comportant :
• un train de roues avant (8) comprenant deux roues et un train de roues arrière (11) comprenant deux roues ;
• un châssis comportant une partie avant (3) de châssis sur laquelle est monté le train de roues avant (8), et une partie arrière (4) de châssis sur laquelle est monté le train de roues arrière (11) ;
• des attelages avant (10) et arrière (12), situés respectivement sur la partie avant (3) de châssis et sur la partie arrière (4) de châssis,
l'attelage avant (10) étant déplaçable, en alternance, entre :
- une position attelée, dans laquelle cet attelage avant (10) coopère avec un attelage arrière, identique à l'attelage arrière (12) de ce véhicule et situé sur une partie arrière de châssis d'un autre véhicule, pour attacher mécaniquement, sans degré de liberté en rotation en lacet la partie avant (3) de châssis de ce véhicule avec la partie arrière de châssis de l'autre véhicule, et
- une position dételée, dans laquelle ces véhicules sont détachés l'un de l'autre,
l'attelage arrière (12) étant déplaçable, en alternance, entre :
- une position attelée, dans laquelle cet attelage arrière (12) coopère avec un attelage avant, identique à l'attelage avant (10) de ce véhicule et situé sur une partie avant de châssis d'un autre véhicule, pour attacher mécaniquement, sans degré de liberté en rotation en lacet la partie arrière (4) de châssis de ce véhicule avec la partie avant de châssis de l'autre véhicule, et
- une position dételée, dans laquelle ces véhicules sont détachés l'un de l'autre ;
ce véhicule étant **caractérisé en ce qu'**il comporte :
• une partie centrale (2) de châssis munie d'un support de charge (7) ;
• un dispositif d'articulation avant (13), interposé entre la partie centrale (2) de châssis et la partie avant (3) de châssis, ce dispositif d'articulation avant (13) permettant à la partie avant (3) de châssis de pivoter, par rapport à la partie centrale (2) de châssis, autour d'un axe d'articulation normal à un plan de roulement du véhicule, de manière à modifier un angle d'articulation de l'avant du véhicule ;
• un dispositif d'articulation arrière (14), interposé entre la partie centrale (2) de châssis et la partie arrière (4) de châssis, ce dispositif d'articulation arrière (14) permettant à la partie arrière (4) de châssis de pivoter, par rapport à la partie centrale (2) de châssis, autour d'un axe d'articulation normal à un plan de roulement du véhicule, de manière à modifier un angle d'articulation de l'arrière du véhicule.

2. Véhicule selon la revendication 1, **caractérisé en ce que** les parties avant (3) de châssis et arrière (4) de châssis sont libres en rotation en lacet par rapport à la partie centrale (2) de châssis.

3. Véhicule selon l'une quelconque des revendications précédentes, **caractérisé en ce que** le dispositif d'articulation avant (13) comporte une articulation formée de barres (13A, 13B) articulées fixées par des pivots (13C, 13D) sensiblement perpendiculaires à un plan de roulement du véhicule.

4. Véhicule selon la revendication 3, **caractérisé en ce que** ladite articulation comporte deux barres croisées (13A, 13B), chacune de ces barres (13A, 13B) étant reliée par l'une de ses extrémités à la partie centrale (2) de châssis et par l'autre de ses extrémités à la partie avant (3) de châssis.

5. Véhicule selon l'une quelconque des revendications précédentes, **caractérisé en ce que** le dispositif d'articulation arrière (14) comporte une articulation formée de barres (14A, 14B) articulées fixées par des pivots (14C, 14D) sensiblement perpendiculaires à un plan de roulement du véhicule.

6. Véhicule selon la revendication 5, **caractérisé en ce que** ladite articulation comporte deux barres croisées (14A, 14B), chacune de ces barres (14A, 14D) étant reliée par l'une de ses extrémités à la partie centrale (2) de châssis et par l'autre de ses extrémités à la partie arrière (3) de châssis.

7. Véhicule selon l'une quelconque des revendications précédentes, **caractérisé en ce que** l'un des trains de roues parmi le train de roues avant (8) et le train de roues arrière (11) présente une voie inférieure à l'autre de ces trains de roues, de sorte que le train de roues avant (8) et arrière (11) de deux véhicules identiques puissent s'emboiter lorsque ces véhicules sont attelés.

8. Véhicule selon l'une quelconque des revendications précédentes, **caractérisé en ce que** la partie centrale (2) de châssis est formée d'une structure porteuse rigide.

9. Véhicule selon l'une quelconque des revendications précédentes, **caractérisé en ce que** la partie centrale (2) de châssis comporte une plate-forme de charge (7) située sous le niveau correspondant à la hauteur des pneumatiques des trains de roues avant (8) et arrière (9).

10. Véhicule selon l'une quelconque des revendications précédentes, **caractérisé en ce qu'**il comporte un dispositif d'indexation (19) contrarotatif symétrique de l'angle d'articulation de l'avant du véhicule et de l'angle d'articulation de l'arrière du véhicule, de sorte que le pivotement de l'une des parties avant (3) ou arrière (4) de châssis par rapport à la partie centrale (2) de châssis entraine le pivotement de l'autre des parties avant (3) ou arrière (4) de châssis du même angle par rapport à la partie centrale (2) de châssis, et dans le sens opposé.

11. Véhicule selon la revendication 10, **caractérisé en ce que** le dispositif d'indexation (19) comporte un jeu de barres (24) et de pivots (25) mobiles agencés autour de pivots fixes (26) par rapport à la partie centrale (2) de châssis, et adaptés à transmettre le pivotement de l'un à l'autre des dispositifs d'articulation (13).

12. Véhicule selon la revendication 10, **caractérisé en ce que** le dispositif d'indexation (19) comporte deux vérins (28A, 28B) disposés chacun entre la partie centrale (2) de châssis et l'une des parties avant (3) de châssis et arrière (4) de châssis, les vérins (28) étant couplés.

13. Véhicule selon l'une des revendications 10 à 12, **caractérisé en ce que** le dispositif d'indexation (19) comporte un amortisseur (27, 29).

14. Véhicule selon l'une quelconque des revendications précédentes, **caractérisé en ce qu'**il comporte un dispositif de direction apte à pivoter les roues du train de roues avant (8) de manière indépendante des dispositifs d'articulation (13, 14).

## Patentansprüche

1. Ankuppelbares Straßenfahrzeug (1), welches aufweist:
• einen vorderen Radsatz (8), der zwei Räder umfasst, und einen hinteren Radsatz (11), der zwei Räder umfasst;
• ein Fahrgestell, das einen vorderen Fahrgestellteil (3), an welchem der vordere Radsatz (8) angebracht ist, und einen hinteren Fahrgestellteil (4), an welchem der hintere Radsatz (11) angebracht ist, aufweist;
• eine vordere (10) und eine hintere (12) Kupplung, die sich am vorderen Fahrgestellteil (3) bzw. am hinteren Fahrgestellteil (4) befinden;
wobei die vordere Kupplung (10) abwechselnd verlagerbar ist zwischen:
- einer angekuppelten Position, in welcher diese vordere Kupplung (10) mit einer hinteren Kupplung zusammenwirkt, die mit der hinteren Kupplung (12) dieses Fahrzeugs identisch ist und sich an einem hinteren Fahrgestellteil eines anderen Fahrzeugs befindet, um den vorderen Fahrgestellteil (3) dieses Fahrzeugs und den hinteren Fahrgestellteil des anderen Fahrzeugs mechanisch, ohne Gierfreiheitsgrad, aneinander anzuhängen, und
- einer abgekuppelten Position, in welcher diese Fahrzeuge voneinander gelöst sind,
wobei die hintere Kupplung (12) abwechselnd verlagerbar ist zwischen:
- einer angekuppelten Position, in welcher diese hintere Kupplung (12) mit einer vorderen Kupplung zusammenwirkt, die mit der vorderen Kupplung (10) dieses Fahrzeugs identisch ist und sich an einem vorderen Fahrgestellteil eines anderen Fahrzeugs befindet, um den hinteren Fahrgestellteil (4) dieses Fahrzeugs und den vorderen Fahrgestellteil des anderen Fahrzeugs mechanisch, ohne Gierfreiheitsgrad, aneinander anzuhängen, und
- einer abgekuppelten Position, in welcher diese Fahrzeuge voneinander gelöst sind,
wobei dieses Fahrzeug **dadurch gekennzeichnet ist, dass** es aufweist:
• einen mittleren Fahrgestellteil (2), der mit einem Lastenträger (7) versehen ist;
• eine vordere Gelenkvorrichtung (13), die zwischen dem mittleren Fahrgestellteil (2) und dem vorderen Fahrgestellteil (3) angeordnet ist, wobei diese vordere Gelenkvorrichtung (13) dem vorderen Fahrgestellteil (3) ermöglicht, in Bezug auf den mittleren Fahrgestellteil (2) um eine zu einer Fahrebene des Fahrzeugs senkrechte Gelenkachse zu schwenken, um einen Gelenkwinkel des Vorderteils des Fahrzeugs zu ändern;
• eine hintere Gelenkvorrichtung (14), die zwischen dem mittleren Fahrgestellteil (2) und dem hinteren Fahrgestellteil (4) angeordnet ist, wobei diese hintere Gelenkvorrichtung (14) dem hinteren Fahrgestellteil (4) ermöglicht, in Bezug auf den mittleren Fahrgestellteil (2) um eine zu einer Fahrebene des Fahrzeugs senkrechte Gelenkachse zu schwenken, um einen Gelenkwinkel des Hinterteils des Fahrzeugs zu ändern.

2. Fahrzeug nach Anspruch 1, **dadurch gekennzeichnet, dass** der vordere (3) und der hintere (4) Fahrgestellteil eine freie Gierdrehung in Bezug auf den mittleren Fahrgestellteil (2) ausführen können.

3. Fahrzeug nach einem der vorhergehenden Ansprüche, **dadurch gekennzeichnet, dass** die vordere Gelenkvorrichtung (13) ein Gelenk aufweist, das von angelenkten Stangen (13A, 13B) gebildet wird, die durch Drehzapfen (13C, 13D) befestigt sind, die im Wesentlichen senkrecht zu einer Fahrebene des Fahrzeugs sind.

4. Fahrzeug nach Anspruch 3, **dadurch gekennzeichnet, dass** das Gelenk zwei sich kreuzende Stangen (13A, 13B) aufweist, wobei jede dieser Stangen (13A, 13B) durch eines seiner Enden mit dem mittleren Fahrgestellteil (2) und durch das andere seiner Enden mit dem vorderen Fahrgestellteil (3) verbunden ist.

5. Fahrzeug nach einem der vorhergehenden Ansprüche, **dadurch gekennzeichnet, dass** die hintere Gelenkvorrichtung (14) ein Gelenk aufweist, das von angelenkten Stangen (14A, 14B) gebildet wird, die durch Drehzapfen (14C, 14D) befestigt sind, die im Wesentlichen senkrecht zu einer Fahrebene des Fahrzeugs sind.

6. Fahrzeug nach Anspruch 5, **dadurch gekennzeichnet, dass** das Gelenk zwei sich kreuzende Stangen (14A, 14B) aufweist, wobei jede dieser Stangen (14A, 14D) durch eines seiner Enden mit dem mittleren Fahrgestellteil (2) und durch das andere seiner Enden mit dem hinteren Fahrgestellteil (3) verbunden ist.

7. Fahrzeug nach einem der vorhergehenden Ansprüche, **dadurch gekennzeichnet, dass** einer der Radsätze von dem vorderen Radsatz (8) und dem hinteren Radsatz (11) eine Spurweite aufweist, die kleiner als die des anderen dieser Radsätze ist, derart, dass der vordere (8) und der hintere (11) Radsatz von zwei identischen Fahrzeugen ineinandergeschoben werden können, wenn diese Fahrzeuge aneinandergekuppelt sind.

8. Fahrzeug nach einem der vorhergehenden Ansprüche, **dadurch gekennzeichnet, dass** der mittlere Fahrgestellteil (2) von einer starren Tragstruktur gebildet wird.

9. Fahrzeug nach einem der vorhergehenden Ansprüche, **dadurch gekennzeichnet, dass** der mittlere Fahrgestellteil (2) eine Ladeplattform (7) aufweist, die sich unter dem Niveau befindet, das der Höhe der Reifen des vorderen (8) und hinteren (9) Radsatzes entspricht.

10. Fahrzeug nach einem der vorhergehenden Ansprüche, **dadurch gekennzeichnet, dass** es eine symmetrische, gegenläufig drehende Indexierungsvorrichtung (19) für den Gelenkwinkel des Vorderteils des Fahrzeugs und den Gelenkwinkel des Hinterteils des Fahrzeugs aufweist, derart, dass die Schwenkung des einen von dem vorderen (3) oder hinteren (4) Fahrgestellteil in Bezug auf den mittleren Fahrgestellteil (2) die Schwenkung des anderen von dem vorderen (3) oder hinteren (4) Fahrgestellteil um denselben Winkel in Bezug auf den mittleren Fahrgestellteil (2), und in der entgegengesetzten Richtung, zur Folge hat.

11. Fahrzeug nach Anspruch 10, **dadurch gekennzeichnet, dass** die Indexierungsvorrichtung (19) einen Satz von beweglichen Stangen (24) und Drehzapfen (25) aufweist, die um in Bezug auf den mittleren Fahrgestellteil (2) ortsfeste Drehzapfen (26) herum angeordnet sind und dafür eingerichtet sind, die Schwenkung von der einen der Gelenkvorrichtungen (13) auf die andere zu übertragen.

12. Fahrzeug nach Anspruch 10, **dadurch gekennzeichnet, dass** die Indexierungsvorrichtung (19) zwei Zylinder (28A, 28B) aufweist, die jeweils zwischen dem mittleren Fahrgestellteil (2) und einem von dem vorderen (3) und dem hinteren (4) Fahrgestellteil angeordnet sind, wobei die Zylinder (28) gekoppelt sind.

13. Fahrzeug nach einem der Ansprüche 10 bis 12, **dadurch gekennzeichnet, dass** die Indexierungsvorrichtung (19) einen Dämpfer (27, 29) aufweist.

14. Fahrzeug nach einem der vorhergehenden Ansprüche, **dadurch gekennzeichnet, dass** es eine Lenkvorrichtung aufweist, die geeignet ist, die Räder des vorderen Radsatzes (8) auf eine von den Gelenkvorrichtungen (13, 14) unabhängige Weise zu schwenken.

## Claims

1. Couplable road vehicle (1) comprising
• an axle assembly for front wheels (8) of a front wheelset comprising two wheels, and an axle assembly for rear wheels (11) of a rear wheelset comprising two wheels;
• a chassis comprising a front chassis portion (3) on which is mounted the axle assembly for the front wheels (8) of the front wheelset, and a rear chassis portion (4) on which is mounted the axle assembly for the rear wheels (11) of the rear wheelset;
• front and rear couplings (10, 12) located on the front chassis portion (3) and on the rear chassis portion (4), respectively,
the front coupling (10) being movable, alternately, between:
- a coupled position, in which this front coupling (10) interacts with a rear coupling that is identical to the rear coupling (12) of this vehicle and located on a rear chassis portion of another vehicle, to mechanically attach, with no degree of rotational and yaw-wise freedom, the front chassis portion (3) of this vehicle with the rear chassis portion of the other vehicle, and
- an uncoupled position, in which these vehicles are detached from each other, the rear coupling (12) being movable, alternately, between:
- a coupled position, in which this rear coupling (12) interacts with a front coupling that is identical to the front coupling (10) of this vehicle and located on a rear chassis portion of another vehicle, to mechanically attach, with no degree of yaw-wise rotational freedom, the rear chassis portion (4) of this vehicle with the front chassis portion of the other vehicle, and
- an uncoupled position, in which these vehicles are detached from each other;
this vehicle being **characterized in that** it comprises:
• a central chassis portion (2) equipped with a load holder (7);
• a front articulation device (13), interposed between the central chassis portion (2) and the front chassis portion (3), this front articulation device (13) allowing the front chassis portion (3) to pivot, with respect to the central chassis portion (2), about an articulation axis normal to a rolling plane of the vehicle, so as to modify an angle of articulation of the front of the vehicle;
• a rear articulation device (14), interposed between the central chassis portion (2) and the rear chassis portion (4), this rear articulation device (14) allowing the rear chassis portion (4) to pivot, with respect to the central chassis portion (2), about an articulation axis normal to a rolling plane of the vehicle, so as to modify an angle of articulation of the rear of the vehicle.

2. Vehicle according to Claim 1, **characterized in that** the front and rear chassis portions (3, 4) are free to rotate yaw-wise with respect to the central chassis portion (2).

3. Vehicle according to either one of the preceding claims, **characterized in that** the front articulation device (13) comprises an articulation formed from articulated bars (13A, 13B) that are fastened by pivots (13C, 13D) substantially perpendicular to a rolling plane of the vehicle.

4. Vehicle according to Claim 3, **characterized in that** said articulation comprises two crossed bars (13A, 13B), each of these bars (13A, 13B) being joined by one of its ends to the central chassis portion (2) and by the other of its ends to the front chassis portion (3).

5. Vehicle according to any one of the preceding claims, **characterized in that** the rear articulation device (14) comprises an articulation formed from articulated bars (14A, 14B) that are fastened by pivots (14C, 14D) substantially perpendicular to a rolling plane of the vehicle.

6. Vehicle according to Claim 5, **characterized in that** said articulation comprises two crossed bars (14A, 14B), each of these bars (14A, 14D) being joined by one of its ends to the central chassis portion (2) and by the other of its ends to the rear chassis portion (3).

7. Vehicle according to any one of the preceding claims, **characterized in that** one of the axle assemblies among the axle assembly for the front wheels (8) of the front wheelset and the axle assembly for the rear wheels (11) of the rear wheelset has an axle track lower than the other of these axle assemblies, so that the axle assembly for the front wheels (8) of the front wheelset and the axle assembly for the rear wheels (11) of the rear wheelset of two identical vehicles may interlock when these vehicles are coupled.

8. Vehicle according to any one of the preceding claims, **characterized in that** the central chassis portion (2) is formed from a rigid carrying structure.

9. Vehicle according to any one of the preceding claims, **characterized in that** the central chassis portion (2) comprises a load platform (7) located under the level corresponding to the height of the tyres of the front and rear wheels (8, 9).

10. Vehicle according to any one of the preceding claims, **characterized in that** it comprises a device (19) for achieving symmetric contra-rotary indexation of the angle of articulation of the front of the vehicle and of the angle of articulation of the rear of the vehicle, so that if either of the front and rear chassis portions (3, 4) pivots with respect to the central chassis portion (2) the other of the front and rear chassis portions (3, 4) pivots by the same angle with respect to the central chassis portion (2), in the opposite direction.

11. Vehicle according to Claim 10, **characterized in that** the device (19) for achieving indexation comprises a set of movable bars (24) and of movable pivots (25) that are arranged about pivots (26) fixed with respect to the central chassis portion (2), and that are suitable for transmitting the pivoting action of one of the articulation devices (13) to the other.

12. Vehicle according to Claim 10, **characterized in that** the device (19) for achieving indexation comprises two hydraulic cylinders (28A, 28B) that are each placed between the central chassis portion (2) and one of the front and rear chassis portions (3, 4), the hydraulic cylinders (28) being coupled.

13. Vehicle according to one of Claims 10 to 12, **characterized in that** the device (19) for achieving indexation comprises a damper (27, 29).

14. Vehicle according to any one of the preceding claims, **characterized in that** it comprises a steering device able to pivot the wheels of the axle assembly for the front wheels (8) of the front wheelset independently of the articulation devices (13, 14).
